# EUROPEAN PATENT SPECIFICATION

(11) **EP 2 730 065 B1**
(45) Date of publication and mention of the grant of the patent: **30.10.2019**
(21) Application number: 12735410.8
(22) Date of filing: 02.07.2012
(51) Int. Cl.: H04L 12/58

(54) **METHOD OF GENERATING IMAGE AT INSTANT MESSAGING CLIENT, AND IMAGE GENERATING APPARATUS AND SYSTEM**
VERFAHREN ZUR BILDERZEUGUNG BEI EINEM SOFORTNACHRICHTENÜBERMITTLUNGS-CLIENT SOWIE BILDERZEUGENDE VORRICHTUNG UND SYSTEM
PROCÉDÉ DE GÉNÉRATION D'IMAGE AU NIVEAU DE CLIENT DE MESSAGERIE INSTANTANÉE, ET APPAREIL ET SYSTÈME DE GÉNÉRATION D'IMAGE

(30) Priority: 05.07.2011 CN 201110188120
(43) Date of publication of application: 14.05.2014
(73) Proprietor: Alibaba Group Holding Limited, Grand Cayman (KY)
(72) Inventor: TANG, Jingxiong, Hangzhou 310013 (CN)
(74) Representative: Barker Brettell LLP
(86) International application number: PCT/US2012/045294
(87) International publication number: WO 2013/006571

(56) References cited:
- EP-A1- 1 942 601
- EP-A1- 1 944 684
- US-A1- 2009 013 265
- US-A1- 2010 064 018

## Description

### CROSS REFERENCE TO RELATED PATENT APPLICATIONS

This application claims priority to Chinese Patent Application No. 201110188120.5, filed on July 05, 2011, entitled "Method of generating image at instant messaging client, and image generating apparatus and system".

### TECHNICAL FIELD

This disclosure relates to the field of computer network technology. More specifically, the disclosure relates to generating images in an instant messaging client system.

### BACKGROUND

Due to the continuous development of electronic commerce (i.e., e- commerce) websites, more and more people are starting to purchase items through the internet. In such websites, images and other features of the items are displayed through the networks. Moreover, buyers and sellers often use instant communication devices to send transactional information to each other to reach a deal. When both parties communicate with each other, they send out item links to advertise or confirm item information. Via the links, the parties can obtain the related image information of the item, and thus get a more intuitive feeling of the item.

In current technologies, a server transmits the image via instant messaging for a client to see item images. After a client device receives images, it displays the image locally. If the size of the image is big, a large amount of bandwidth may be consumed. This may present problems, for example, when there is a limit to the network bandwidth.

US2009013265 (A1) discloses a method of providing instant messaging communication between a first user and at least one other user via a communication network. The method comprises: executing an instant messaging client at a user terminal of the first user, the instant messaging client having a user interface comprising a message composition region; the instant messaging client receiving a selection of media for insertion into the instant messaging communication from the first user; the instant messaging client generating a link comprising the address of the selected media at a network element and creating a selectable control with the link embedded therein; inserting the selectable control in the message composition region of the instant messaging client; the instant messaging client receiving user-viewable text entered by the first user into the message composition region in addition to the selectable control; and the instant messaging client transmitting the contents of the message composition region of the instant messaging client to the at least one other user over the communication network responsive to a command from the first user.

EP1942601 (A1) discloses a method of expressing information contained in a communication message sent through a network from a sending party to a receiving party that includes receiving the incoming message, scanning the incoming communication message to identify pre-defined information therein, generating an operating message from the pre-defined information to control a functional component of an expressing device, and sending the operating message to the functional component. The pre-defined information is expressed by the functional component in a pre-configured mode that may include action, sound, light and images. The representation provided in the pre-defined Information in the communication message of the sending party is manifested by the expressing device of the receiving party.

### SUMMARY

The present disclosure concerns a method for generating images in an instant messaging client. In a first aspect, the present disclosure provides one or more computer readable media as defined in claim 1. In a second aspect, the present disclosure provides a method as defined in claim 8. In a third aspect, the present disclosure provides a computing device as defined in claim 12.

In some disclosed examples, the instant messaging client device may retrieve link information. If the link information is associated with item information, the device may retrieve predetermined verification parameters of the item link information. Also, the device may retrieve from the server item feature information that corresponds to the predetermined verification parameters. The device may then generate an item information image, and display the image.

In some disclosed examples, the item information image may be generated based on the item feature information and image layout strategy data. The item information image may be generated based on at least one of the image layout strategies and the item's images, image styles, prices or quantity information. The device may retrieve the item feature information that corresponds to the predetermined verification parameters from the item information server.

In some disclosed examples, the device may include a first retrieval unit, an assessment unit, a second retrieval unit, a calculation saving unit and a display unit.

### BRIEF DESCRIPTION OF THE DRAWINGS

The Detailed Description is described with reference to the accompanying figures. The use of the same reference numbers in different figures indicates similar or identical items
FIG. 1 is a flow diagram of an illustrative process to generating images in an instant messaging client.
FIG. 2 is a flow diagram of another illustrative process to generating images in an instant messaging client.
FIG. 3 is a block diagram of an illustrative device that generates images.
FIG. 4 is a block diagram of an illustrative environment that supports generating images.

### DETAILED DESCRIPTION

The exemplary embodiments of the present disclosure as discussed below include methods for searching, and computing devices for, for example, generating images. The exemplary embodiments described are merely a portion of the present disclosure's exemplary embodiments, and do not include all of the exemplary embodiments. For the ordinary technical persons in the art, if they have obtained other exemplary embodiments under the premise that no creative efforts are exerted, these exemplary embodiments fall under the protective scope of the present disclosure.

In this disclosure, an item information image can be generated based on item information data and image style downloaded by a client device from a server. The client device may generate and store images, and thus decrease calculation amount and storage needed in the server to save costs. Based on the item information data and image style downloaded from the server, the client device can generate item information images that satisfy requirements. The client device may also generate formats of the item information image and content of configuration files that are downloaded from the server. This can satisfy the scalability of generated images.

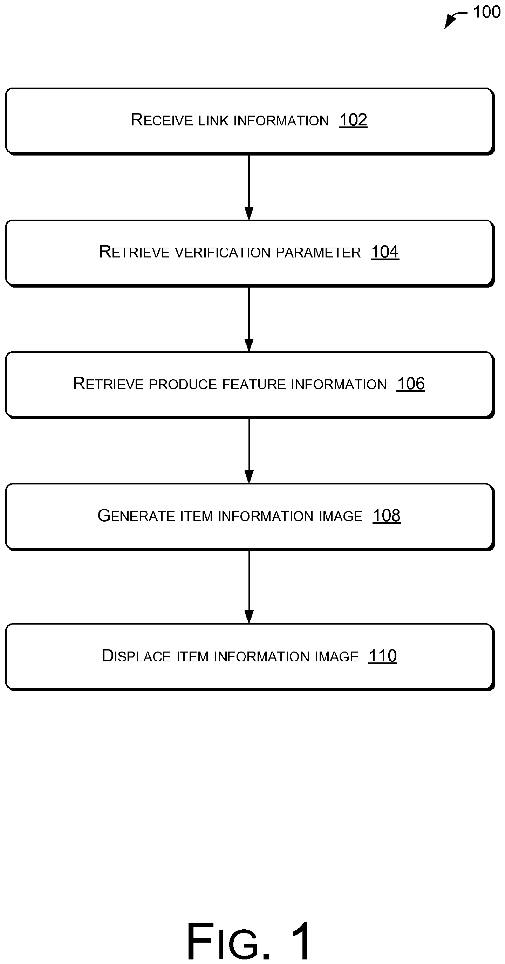

FIG. 1 is a flow diagram of an illustrative process 100 to generating images in an instant messaging client. At 102, the client device may retrieve link information. This may be implemented using an instant messaging. For example, the link information may be included in messages that are transmitted from a user to another user. At 104, the client device may retrieve predetermined verification parameters after determining that the link information includes item link information. At 106, the client device may retrieve item feature information. At 108, the client device may then generate item information image. At 110, the client device may display item information image.

In some embodiments, the link information from the server can be obtained by using software installed in the client device. The software may include an instant messaging application, e.g., Tao-Bao-Wang-Wang. The client device may assess whether the link information includes item link information. This assessment may be implemented using regular expressions. In some embodiments, rules of the regular expressions are determined by requesting parties. For example, "fixed domain name + special parameter name" may be used for the assessment. If the link information includes item link information, the client device may retrieve predetermined verification parameters included in the item link information. Link formats associated with the item link information may be predefined. The predetermined verification parameters may include different characteristics (e.g. domain name and parameters).

In some embodiments, the client device may assess the characteristics to determine whether the link is an item link. If the link is an item link, the client device may further determine what items are indicated in the link, and retrieve the predetermined verification parameters to obtain from an item information server the item feature information that corresponds to the predetermined verification parameters. The client device can also download the retrieved item feature information. Based on the item feature information, the client device may generate the item information image. In some embodiments, the image can be generated in the client device locally. For example, an instant messaging client may retrieve the corresponding information from the item information server (e.g. item images, item names, logos, quantities, prices, and layouts).

In some embodiments, based on the item feature information, the client device may perform calculations to generate an image. For example, the instant messaging client of the client device may retrieve from the server item names (e.g., in text formats), item quantities (e.g., in text formats), item prices (e.g., in text formats), item images (e.g., in image formats), and other icons (e.g., in image formats). The other icons may indicate reputations of users, e.g., whether users are loyal users or users in good faith. The instant messaging client may also retrieve a pre-configured image layout strategy data (e.g., layout file), which may indicate where the item name and item image are displayed, and other related information.

In some embodiments, based on the layout file and item name, price and other such information, the client device may generate an item information image that includes the image and/or text information as well as image/icon information, and display the item information image. The client device may also save the generated item information image in a predetermined space of an interface of an instant messaging application. The client device may, based on the user's requirements, display the generated item information image to the user to enable the user to have a more intuitive and sensible knowledge of the item.

In some embodiments, the predetermined verification parameters can be set as one or more feature codes that correspond to an item. For example, for a certain brand of shoes, such as COOL, its corresponding feature code may be assigned as XZCOOL. Based on actual requirements, the feature codes can be defined as one-dimensional or two-dimensional code. In some embodiments, they can also be multi-dimensional or other types of codes that can be used as differentiators or identifiers.

In some embodiments, the item feature code can include item information data and image layout strategy. The item information data can include the item's images or image styles, prices and quantities and other such parameters. The item information data can also include other parameters that identify the item features.

In some embodiments, a client A may retrieve the link information from client B. The client A may assess whether the link information obtained from client B includes item link information. If the link information includes item link information, client A may retrieve predetermined verification parameters of the item link information from client B. Based on the predetermined verification parameters, the client A may retrieve the item feature information that corresponds to the predetermined verification parameters from an item information server that may store information related to the item. This stored item feature information can be predetermined by platform operators or refreshed in the server in predetermined time period. The item feature information may be uploaded by sellers from client devices to the server. The client A can download the retrieved item feature information locally. Based on the item feature information, a client device associated with the client A may generate the item information image locally. The client device may store the generated item information image in a local predetermined space. After generating the item information image, based on the user's requirements, the client device may display the generated item information image. In some embodiments, the server may perform searches for the item that corresponds to the predetermined verification parameters, and then retrieve the item's feature information.

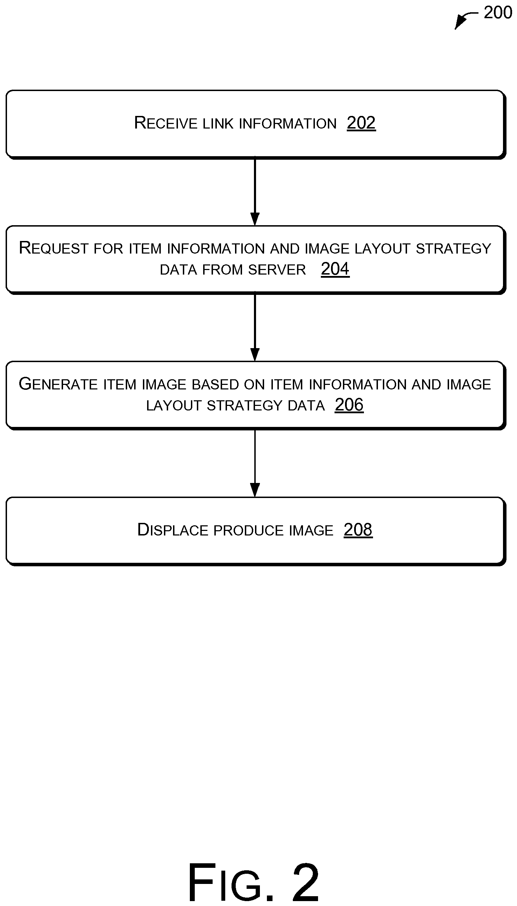

FIG. 2 is a flow diagram of another illustrative process 200 for generating images. At 202, a client device may receive link information. In some embodiments, the client device may transmit link information to another client device or receive the link information from another client device. The client device may obtain the predetermined verification parameters from the other client device or a server. At 204, the client device may request for the item feature information and image layout strategy data from the server. For example, the client device may transmit a query or a request to the server for item feature information that corresponds to the predetermined verification parameters. Based on the query, the server may perform searches to obtain the item feature information.

At 206, the client device may generate item information image based on the item information data and the image layout strategy data. At 208, the client device may display the generated image.

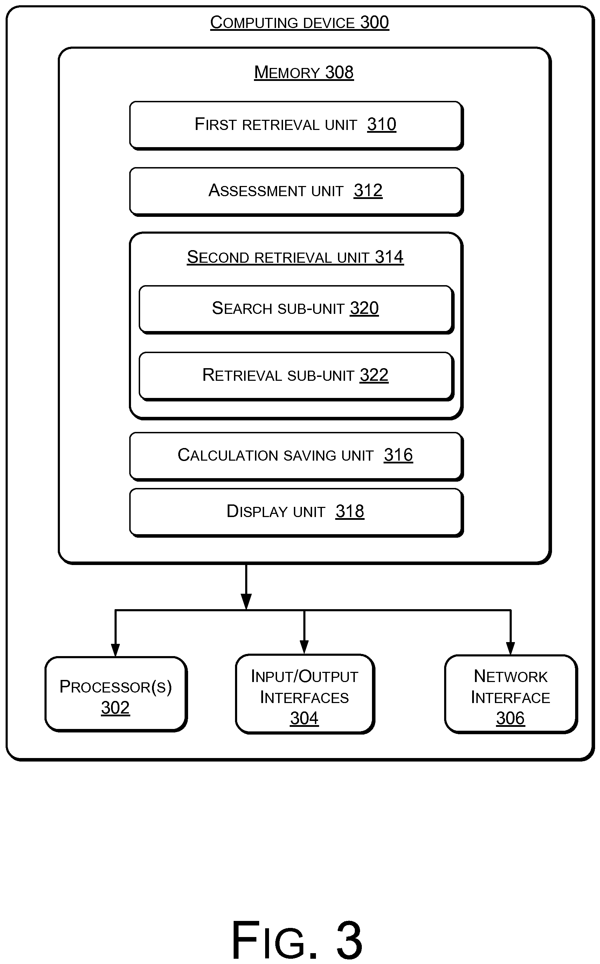

FIG. 3 is a block diagram of an illustrative device 300 that generates images. The device 300 may be configured as any suitable computing device(s). In one exemplary configuration, the device 300 includes one or more processors 302, input/output interfaces 304, network interface 306, and memory 308.

The memory 308 may include computer-readable media in the form of volatile memory, such as random-access memory (RAM) and/or non-volatile memory, such as read only memory (ROM) or flash RAM. The memory 308 is an example of computer-readable media.

Computer-readable media includes volatile and non-volatile, removable and non-removable media implemented in any method or technology for storage of information such as computer readable instructions, data structures, program modules, or other data. Examples of computer storage media include, but are not limited to, phase change memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that can be used to store information for access by a computing device. As defined herein, computer-readable media does not include transitory media such as modulated data signals and carrier waves.

Turning to the memory 308 in more detail, the memory 308 may store a first retrieval unit 310, assessment unit 312, a second retrieval unit 314, a calculation saving unit 316, and a display unit 318. The second retrieval unit 314 may further include a search sub-unit 320 and a retrieval sub-unit 322.

The first retrieval unit 310 may retrieve the link information from the instant messaging client. The assessment unit 312 may assess if the link information includes item information. If yes, the predetermined verification parameters of the item link information may be retrieved. The second retrieval unit 314 may retrieve the item feature information that corresponds to the predetermined verification parameters. The calculation saving unit 316 may generate the item information image and save it. The display unit 318 may display the item information image.

In some embodiments, the search sub-unit 320 may perform searches for the items that correspond to the predetermined verification parameters, and the retrieval sub-unit 322 may retrieve the item feature information.

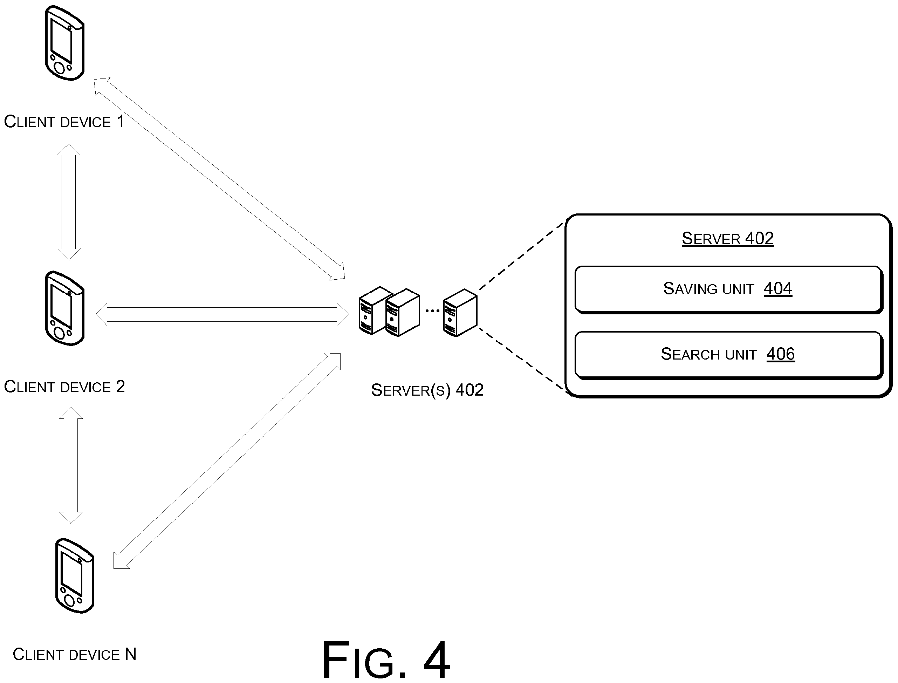

Fig. 4 is a block diagram of an illustrative environment that supports generating images. The server 402 may include a saving unit 404 and a search unit 406. The saving unit 404 may save the item feature information. The search unit 406 may perform searches for the item feature information that correspond to the predetermined verification parameters.

The specific examples herein are utilized to illustrate the principles and embodiments of the application. The description of the embodiments above is designed to assist in understanding the method and ideas of the present disclosure.

## Claims

1. One or more computer-readable media storing computer-executable instructions that, when executed by one or more processors, instruct the one or more processors to perform steps comprising:
receiving (102, 202) at a client device an instant message that includes link information associated with a transaction of an item;
retrieving (104), at the client device from the link information, one or more parameters associated with the item based on the instant message;
obtaining (204) at the client device from a server (402) item feature information and image layout strategy data, wherein the item feature information is associated with the item based on the one or more parameters; and
generating (206) at the client device an item information image based on the item feature information and the image layout strategy data.

2. The one or more computer-readable media of claim 1, wherein the steps further comprise displaying (110, 208) the item information image.

3. The one or more computer-readable media of claim 1 or claim 2, wherein the steps further comprise determining that the instant message is associated with the transaction of the item based on a predetermined rule.

4. The one or more computer-readable media of any one of claims 1 to 3, wherein the item feature information includes at least one of an item image, an item name, a logo associated with the item, or an item price.

5. The one or more computer-readable media of any one of claims 1 to 4, wherein the item feature information indicates a reputation of a user associated the transaction.

6. The one or more computer-readable media of any one of claims 1 to 5, wherein the item information image is generated at the client device.

7. A method for generating images in an instant messaging client comprising:
under control of one or more client devices comprising one or more processors,
receiving (102, 202) at the client device an instant message that includes link information associated with a transaction of an item;
retrieving (104) one or more parameters associated with the item based on the instant message from the link information;
obtaining (204) at the client device from a server (402) item feature information and image layout strategy data, wherein the item feature information is associated with a transaction of an item based on the one or more parameters; and
generating (206) at the client device an item information image based on the item feature information and the image layout strategy data.

8. The method of claim 7, further comprising:
determining whether the link information includes transaction information associated with an item;
in an event that the link information includes transaction information associated with an item, retrieving the one or more parameters from the link information; and
displaying (110, 208) the item information image by the client device.

9. The method of claim 7 or claim 8, wherein the receiving (102, 202) the link information is implemented using instant messaging.

10. The method of any of claims 7 to 9, wherein the one or more parameters are specified based on a predetermined rule.

11. A computing device (300) comprising:
one or more processors (302); and
memory (308) to maintain a plurality of components executable by the one or more processors, the plurality of components comprising:
a first retrieval unit (310) that is configured to receive an instant message that includes link information from a client device,
an assessment unit (312) that is configured to determine that the link information is associated with a transaction of an item,
a second retrieval unit (314) that is configured to retrieve from the link information, one or more parameters associated with the item based on the instant message and to obtain (204) from a server (402) item feature information and image layout strategy data, wherein the item feature information is associated with the item, based on the one or more parameters, and
a calculation saving unit (316) that is configured to generate an item information image based on the item feature information and the image layout strategy data.

12. The computing device of claim 11, wherein the obtaining the item feature information comprises obtaining the item feature information from a server associated with the transaction.

13. The computing device of claim 11 or claim 12, wherein the link information is received from the client device using instant messaging.

## Patentansprüche

1. Ein oder mehrere computerlesbare Medien, die computerausführbare Anweisungen speichern, die, wenn sie durch einen oder mehrere Prozessoren ausgeführt werden, den einen oder die mehreren Prozessoren anweisen, Schritte durchzuführen, die umfassen:
Empfangen (102, 202), an einem Clientgerät, einer Sofortnachricht, die Verknüpfungsinformationen einschließt, die einer Transaktion eines Gegenstands zugeordnet sind;
Abrufen (104), an dem Clientgerät aus den Verknüpfungsinformationen, eines oder mehrerer Parameter, die dem Gegenstand basierend auf der Sofortnachricht zugeordnet sind;
Erhalten (204), an dem Clientgerät von einem Server (402), von Gegenstandsmerkmalsinformationen und Bildlayoutstrategiedaten, wobei die Gegenstandsmerkmalsinformationen dem Gegenstand basierend auf dem einen oder den mehreren Parametern zugeordnet sind; und
Erzeugen (206), an dem Clientgerät, eines Gegenstandsinformationenbilds basierend auf den Gegenstandsmerkmalsinformationen und den Bildlayoutstrategiedaten.

2. Ein oder mehrere computerlesbare Medien nach Anspruch 1, wobei die Schritte weiter Anzeigen (110, 208) des Gegenstandsinformationenbilds umfasst.

3. Ein oder mehrere computerlesbare Medien nach Anspruch 1 oder Anspruch 2, wobei die Schritte weiter Bestimmen, dass die Sofortnachricht der Transaktion des Gegenstands basierend auf einer vorbestimmten Regel zugeordnet ist, umfassen.

4. Ein oder mehrere computerlesbare Medien nach einem der Ansprüche 1 bis 3, wobei die Gegenstandsmerkmalsinformationen mindestens eines von einem Gegenstandsbild, einem Gegenstandsnamen, einem dem Gegenstand zugeordneten Logo oder einem Gegenstandspreis einschließen.

5. Ein oder mehrere computerlesbare Medien nach einem der Ansprüche 1 bis 4, wobei die Gegenstandsmerkmalsinformationen eine Reputation eines der Transaktion zugeordneten Benutzers angeben.

6. Ein oder mehrere computerlesbare Medien nach einem der Ansprüche 1 bis 5, wobei das Gegenstandsinformationenbild an dem Clientgerät erzeugt wird.

7. Verfahren zum Erzeugen von Bildern in einem Sofortnachrichtenclient, umfassend:
unter Steuerung von einem oder mehreren Clientgeräten, die einen oder mehrere Prozessoren umfassen,
Empfangen (102, 202), an dem Clientgerät, einer Sofortnachricht, die Verknüpfungsinformationen einschließt, die einer Transaktion eines Gegenstands zugeordnet sind;
Abrufen (104), aus den Verknüpfungsinformationen, eines oder mehrerer Parameter, die dem Gegenstand basierend auf der Sofortnachricht zugeordnet sind;
Erhalten (204), an dem Clientgerät von einem Server (402), von Gegenstandsmerkmalsinformationen und Bildlayoutstrategiedaten, wobei die Gegenstandsmerkmalsinformationen einer Transaktion eines Gegenstands basierend auf dem einen oder den mehreren Parametern zugeordnet sind; und
Erzeugen (206), an dem Clientgerät, eines Gegenstandsinformationenbilds basierend auf den Gegenstandsmerkmalsinformationen und den Bildlayoutstrategiedaten.

8. Verfahren nach Anspruch 7, weiter umfassend:
Bestimmen, ob die Verknüpfungsinformationen Transaktionsinformationen einschließen, die einem Gegenstand zugeordnet sind;
in einem Fall, dass die Verknüpfungsinformationen Transaktionsinformationen einschließen, die einem Gegenstand zugeordnet sind, Abrufen des einen oder der mehreren Parameter aus den Verknüpfungsinformationen; und
Anzeigen (110, 208) des Gegenstandsinformationenbilds durch das Clientgerät.

9. Verfahren nach Anspruch 7 oder Anspruch 8, wobei das Empfangen (102, 202) der Verknüpfungsinformationen unter Verwendung von Sofortnachrichten implementiert ist.

10. Verfahren nach einem der Ansprüche 7 bis 9, wobei der eine oder die mehreren Parameter basierend auf einer vorbestimmten Regel spezifiziert sind.

11. Rechnergerät (300), umfassend:
einen oder mehrere Prozessoren (302); und
Speicher (308), um eine Vielzahl von Komponenten beizubehalten, die durch den einen oder die mehreren Prozessoren ausführbar sind, wobei die Vielzahl von Komponenten umfasst:
eine erste Abrufeinheit (310), die dafür eingerichtet ist, eine Sofortnachricht, die Verknüpfungsinformationen einschließt, von einem Clientgerät zu empfangen,
eine Auswerteeinheit (312), die dafür eingerichtet ist, zu bestimmen, dass die Verknüpfungsinformationen einer Transaktion eines Gegenstands zugeordnet sind,
eine zweite Abrufeinheit (314), die dafür eingerichtet ist, aus den Verknüpfungsinformationen einen oder mehrere Parameter abzurufen, die dem Gegenstand basierend auf der Sofortnachricht zugeordnet sind, und von einem Server (402) Gegenstandsmerkmalsinformationen und Bildlayoutstrategiedaten zu erhalten (204), wobei die Gegenstandsmerkmalsinformationen dem Gegenstand zugeordnet sind, basierend auf dem einen oder den mehreren Parametern, und
eine Berechnungsabspeichereinheit (316), die dafür eingerichtet ist, ein Gegenstandsinformationenbild basierend auf den Gegenstandsmerkmalsinformationen und den Bildlayoutstrategiedaten zu erzeugen.

12. Rechnergerät nach Anspruch 11, wobei das Erhalten der Gegenstandsmerkmalsinformationen Erhalten der Gegenstandsmerkmalsinformationen von einem Server, der der Transaktion zugeordnet ist, umfasst.

13. Rechnergerät nach Anspruch 11 oder Anspruch 12, wobei die Verknüpfungsinformationen von dem Clientgerät unter Verwendung von Sofortnachrichten empfangen werden.

## Revendications

1. Un ou plusieurs supports lisibles par ordinateur stockant des instructions exécutables par ordinateur qui, lorsqu'elles sont exécutées par un ou plusieurs processeurs, donnent l'instruction aux un ou plusieurs processeurs de réaliser les étapes comprenant :
la réception (102, 202) au niveau d'un dispositif client d'un message instantané qui comporte des informations de lien associées à une transaction d'un article ;
l'extraction (104), au niveau du dispositif client, à partir des informations de lien, d'un ou de plusieurs paramètres associés à l'article sur la base du message instantané ;
l'obtention (204) au niveau du dispositif client à partir d'un serveur (402) d'informations de caractéristiques d'article et de données de stratégie de disposition d'image, dans lesquels les informations de caractéristiques d'article sont associées à l'article sur la base des un ou plusieurs paramètres ; et
la génération (206) au niveau du dispositif client d'une image d'informations d'article sur la base des informations de caractéristiques d'article et des données de stratégie de disposition d'image.

2. Un ou plusieurs supports lisibles par ordinateur selon la revendication 1, dans lesquels les étapes comprennent en outre l'affichage (110, 208) de l'image d'informations d'article.

3. Un ou plusieurs supports lisibles par ordinateur selon la revendication 1 ou la revendication 2, dans lesquels les étapes comprennent en outre le fait de déterminer que le message instantané est associé à la transaction de l'article sur la base d'une règle prédéterminée.

4. Un ou plusieurs supports lisibles par ordinateur selon l'une quelconque des revendications 1 à 3,
dans lesquels les informations de caractéristiques d'article comportent au moins l'un parmi une image d'article, un nom d'article, un logo associé à l'article, ou un prix d'article.

5. Un ou plusieurs supports lisibles par ordinateur selon l'une quelconque des revendications 1 à 4, dans lesquels les informations de caractéristiques d'article indiquent une réputation d'un utilisateur associé à la transaction.

6. Un ou plusieurs supports lisibles par ordinateur selon l'une quelconque des revendications 1 à 5, dans lesquels l'image d'informations d'article est générée au niveau du dispositif client.

7. Procédé pour générer des images dans un client de messagerie instantanée comprenant :
la sous-commande d'un ou de plusieurs dispositifs client comprenant un ou plusieurs processeurs,
la réception (102, 202) au niveau du dispositif client d'un message instantané qui comporte des informations de lien associées à une transaction d'un article ;
l'extraction (104) d'un ou de plusieurs paramètres associés à l'article sur la base du message instantané à partir des informations de lien ;
l'obtention (204) au niveau du dispositif client à partir d'un serveur (402) d'informations de caractéristiques d'article et de données de stratégie de disposition d'image,
dans lequel les informations de caractéristiques d'article sont associées à une transaction d'un article sur la base des un ou plusieurs paramètres ; et
la génération (206) au niveau du dispositif client d'une image d'informations d'article sur la base des informations de caractéristiques d'article et des données de stratégie de disposition d'image.

8. Procédé selon la revendication 7, comprenant en outre :
le fait de déterminer si les informations de lien comportent des informations de transaction associées à un article ;
dans un cas où les informations de lien comportent des informations de transaction associées à un article, l'extraction des un ou plusieurs paramètres à partir des informations de lien ; et
l'affichage (110, 208) de l'image d'informations d'article par le dispositif client.

9. Procédé selon la revendication 7 ou la revendication 8, dans lequel la réception (102, 202) des informations de lien est mise en œuvre en utilisant une messagerie instantanée.

10. Procédé selon l'une quelconque des revendications 7 à 9, dans lequel les un ou plusieurs paramètres sont spécifiés sur la base d'une règle prédéterminée.

11. Dispositif informatique (300) comprenant :
un ou plusieurs processeurs (302) ; et
une mémoire (308) pour maintenir une pluralité de composants exécutables par les un ou plusieurs processeurs, la pluralité de composants comprenant :
une première unité d'extraction (310) qui est configurée pour recevoir un message instantané qui comporte des informations de lien à partir d'un dispositif client,
une unité d'évaluation (312) qui est configurée pour déterminer que les informations de lien sont associées à une transaction d'un article,
une seconde unité d'extraction (314) qui est configurée pour extraire à partir des informations de lien un ou plusieurs paramètres associés à l'article sur la base du message instantané et pour obtenir (204) à partir d'un serveur (402) des informations de caractéristiques d'article et des données de stratégie de disposition d'image, dans lequel les informations de caractéristiques d'article sont associées à l'article sur la base des un ou plusieurs paramètres, et
une unité de sauvegarde de calcul (316) qui est configurée pour générer une image d'informations d'article sur la base des informations de caractéristiques d'article et des données de stratégie de disposition d'image.

12. Dispositif informatique selon la revendication 11, dans lequel l'obtention des informations de caractéristiques d'article comprend l'obtention des informations de caractéristiques d'article à partir d'un serveur associé à la transaction.

13. Dispositif informatique selon la revendication 11 ou la revendication 12, dans lequel les informations de lien sont reçues à partir du dispositif client en utilisant une messagerie instantanée.
